# EUROPÄISCHE PATENTSCHRIFT

(11) **EP 0 960 486 B1**
(45) Veröffentlichungstag und Bekanntmachung des Hinweises auf die Patenterteilung: **04.06.2003**
(21) Anmeldenummer: 98908074.2
(22) Anmeldetag: 09.02.1998
(51) Int. Cl.: H04B 5/00

(54) **EINRICHTUNG ZUR BERÜHRUNGSLOSEN INFORMATIONS- UND ENERGIEÜBERTRAGUNG**
METHOD FOR CONTACTLESS INFORMATION AND POWER TRANSMISSION
DISPOSITIF DE TRANSMISSION SANS CONTACT D'INFORMATIONS ET D'ENERGIE

(30) Priorität: 13.02.1997 DE 19705301
(43) Veröffentlichungstag der Anmeldung: 01.12.1999
(73) Patentinhaber: VWB GmbH, 58097 Hagen (DE)
(72) Erfinder: VOSS, Wolfgang, D-58540 Iserlohn (DE)
(86) Internationale Anmeldenummer: EP9800713
(87) Internationale Veröffentlichungsnummer: WO98036507

(56) Entgegenhaltungen:
- US-A- 4 242 666
- US-A- 4 550 444
- US-A- 4 792 910
- US-A- 4 816 654
- US-A- 5 451 763

## Beschreibung

Die Erfindung betrifft eine Einrichtung zur berührungslosen Informationsund Energieübertragung nach dem Oberbegriff des Patentanspruches 1. Dabei ist die Einrichtung für einen drahtlos arbeitenden Datenspeicher ohne eigene Stromversorgung mit einer zugehörigen stromversorgten Steuereinheit in Form einer Datenleseeinrichtung ausgestattet, wobei kapazitive Koppelelemente vorhanden sind, und eine Datenübertragung bei gleichzeitiger nicht unterbrochener Energieübertragung ausgeführt wird.

Die US 5,451,763 zeigt bereits eine Einrichtung zur berührungslosen Informations- und Energieübertragung. Die Energieübertragung erfolgt dabei über induktive Koppelelemente und die Datenübertragung über kapazitive Kappelelemnte. Die Daten werden ausschließlich über die kapazitiven Koppelelemnte übertragen, so daß nur ein bidirektionaler und asynchroner Datentransfer realisierbar ist. Die Datenübertragung ist demzufolge langsam und das kapazitive Interface aufwendig konstruiert.

Des weiteren ist es aus der US 4,550,444 bekannt, die Energie- und Datenübertragung ausschließlich über induktive Koppelelemente zu realisieren. Auch dabei wird durch die Mehrfachnutzung eines Übertragungsweges ein asynchrone und zeitaufwendige Übertragung geschaffen.

Eine Einrichtung zur drahtlosen Infonnationsabkage von einer Antwortstation ist aus der DE 40 17 934 C2 bekannt geworden. Bei dieser Einrichtung wird die Antwortstation durch das drahtlose Abfragesignal einer Abfragestation mit der notwendigen Energie versorgt. Dabei wird die Energie und die Datenübertragung über Kondensatoren kapazitiv so ausgeführt, indem auf der Abfragestation ein Generator eine Wechselspannung erzeugt, die über die Kondensatoren zur Antwortstation übertragen und dort gleichgerichtet wird. Dadurch erhält die Antwortstation ihre notwendige Energieversorgung, und es wird auch gleichzeitig das übertragene Wechselspannungssignal dafür genutzt, um daraus ein Taktsignal zu bilden, das zum einen die Abgabe des von der Antwortstation zu liefernden Datenbitstromes steuert und zum anderen zur Bildung eines Datenübertragungssignales verwendet wird.

Weitere Verfahren und Einrichtungen sind bekannt, bei denen die Energie über Spulen durch induktive Kopplung übertragen wird. Die Datenruckübertragung erfolgt dabei über eine Belastungsänderung in der Transpondereinheit, was immer zwangsläufig zu einer Unterbrechung oder zumindest zu einer Beeinträchtigung, d.h. einen Einbruch der Energieübertragung zur Folge hat.

Aus der DE 37 14 195 A1 ist beispielsweise ein Verfahren zur berührungslosen Energie- und Datenübertragung zwischen einer stromversorgten

Hauptelektronik und einer nicht stromversorgten Teilelektronik mit einer Energiespeicherschaltung bekannt geworden. Der Energie- und Datenaustausch wird hier von einem Mikrocontroller so gesteuert, daß abwechseind Energie und Daten über die Koppelelemente übertragen werden. Hierdurch wird zwangsläufig während einer Datenübertragung eine Energieübertragung unterbrochen.

Der DE 41 30 903 A1 ist ferner eine Einrichtung zur berührungslosen Energie- und Datenübertragung für ein ldentifikationssystem,mit einer Stromversorgten elektrischen Primäreinheit und einer elektrischen Sekundäreinheit zu entnehmen. Diese Einheiten werden über induktive Koppelelemente miteinander gekoppelt. Die Datenübertragung zur Sekundäreinheit ertolgt über eine Modulation der Energieimpulse. Die Energieübertragung bedeutet dabei eine Daten-Eins und keine Energieübertragung bedeutet dabei eine Daten-Null. Zwangsläufig wird somit bei der Datenübertragung einer Null die Energieübertragung unterbrochen. Die Datenrückübertragung erfolgt von der Sekundäreinheit über eine Laständerung in der Sekundäreinheit, wodurch die Energieversorgung nachteilig beeinflußt wird.

Ein tragbares, feldprogrammierbares Detektierplättchen wird in der europäischen Patentanmeldung 0 441 237 A1 beschrieben. Dieser Erfendung liegt die Aufgabe zugrunde, ein einfaches. platzsparendes und vor altem über große Abstände zu programmierendes Detektierplättetchen zu schaffen. Dabei wird ein und derselbe Resonanzkreis durch die Modulationseinkopplung einer Schreib/Lesevorrichtung beeinflußt. Die Beeinflussung geschieht in der Form, daß ein Decoder für PPM-codierte Schaltsignale im Detektierplättchen in der Art gesteuert wird, daß Daten in den Speicher des Detektierptättchens über Feldmodulation geschrieben werden.

Die DE 39 28 561 A1 offenbart ein Vollduplex-Antwort-Sendersystem, bei dem eine Abfrageeinrichtung eine durch Modulation beinflußte Trägerwelle aussendet. Dabei wird mit einem Abfragesignal die erhaltene impulsförmige Abfragesignalwelle und eine unmodulierte weitere Trägerwelle als Energiewelle zu dem Anwortsender ausgesendet. Der Antwortsender leitet dann aus der empfangenen Energiewelle eine Gleichspannung ab und erzeugt gleichzeitig eine zweite harmonische Komponente hierzu. Zu diesem Signal moduliert der Antwortsender dann eine zweite harmonische Komponente mit einem Antwortsignal unter Bildung einer impulsförmigen Antwortsignalwelle. Diese wird anschließend zu der Abfrageeinrichtung übertragen.

Alle zum Stand der Technik zählenden Transpondersysteme weisen den Nachteil auf, daß entweder während der Datenübertragung bzw. der Datenrüdcksendung eine Unterbrechung der Energieübertragung eintritt.

Bei allen vorstehend genannten, zum Stand der Technik gehörenden Vorrichtungen bzw. Systemen wird die Energieübertragung deshalb während einer Datenübertragung nachteilig beeinflußt, was zwangsläufig auf eine Verringerung des Leseabstandes oder bei vorgegebenem Abstand zwischen veränderlicher Station und fester Station die Datenübertragung störanfälliger oder auch deutlich langsamer macht.

Die meisten Vorrichtungen bzw. Systeme benötigen darüber hinaus zur Synchronisation mehrere Generatoren. Diese Art der Datenübertragung und gleichzeitig auch der Energieübertragung ist sehr aufwendig.

Der Erfindung liegt deshalb die Aufgabe zugrunde, den Stand der Technik der DE 40 17 934 C2 dahingehend zu verbessern, daß eine preiswerte, sicher arbeitende Einrichtung zur berührungslosen Energie- und gleichzeitig Datenübertragung geschaffen wird.

Die Aufgabe der Erfindung wird nach dem Kennzeichen des Patentanspruches 1 gelöst. Dabei wird eine Einrichtung zur berührungslosen Energieund Datenübertragung geschaffen, die insbesondere zum Aufbau von berührungslos arbeitenden Datenspeichern dient. Der Datenspeicher wird dabei von einer Steuereinheit berührungsfrei über eine Phasensprungmodulation und Frequenzmodulation beschrieben und der Datenspeicher gleichzeitig berührungslos über induktive Koppelelemente mit Energie versorgt. Dabei wird die Energieübertragung kontinuierlich ohne Unterbrechung und Beeinträchtigung während eines Lese- oder Schreibzyklusses ausgeführt und es kann deshalb ein besonders großer Lese-jund Schreibabstand der Speichereinheit bei einer hohen Störsicherheit erreicht werden. Durch die kontinuierliche Energieübertragung wird somit der Einfluß von störenden Elementen weitgehend eliminiert. Derartige Datenspeicher, die berührungslos gelesen und beschrieben werden, können somit als Identifikationssystem für Personen, Paletten, Werkzeuge, Container usw. eingesetzt werden. Dabei steht an erster Stelle bei allen Einsatzfällen, daß eine sichere Datenübertragung auf möglichst großem Abstand auch bei Störeinflüssen, wie zB. Vibrationen des Datenspeichers oder elektromagnetischen Einflüssen sicher übertragen wird. Dabei spielt ein wesentlicher Faktor zur Verbesserung der Störsicherheit, daß eine ausreichend gute Energieübertragung erfolgt. Wenn die Energieübertragung einwand frei ist, kann auch die Datenrückübertragung (Lesen/Schreiben) mit einer großen Energie erfolgen.

Weiterhin ist es von großem Vorteil, wenn die üblicherweise verwendete Amplitudenmodulation nicht angewendet werden braucht, da zwangsläufig auch kleinere Abstandsänderungen zwischen der Steuereinheit und dem Datenspeicher, in Form eines Informationsträgers, wie Z.B. Scheckkarte oder andere Einrichtungen, wie sie zwangsläufig bei Vibrationen auftreten, immer wieder zu ungewollten Amplitudenmodulationen führen

Die durch den Stand der Technik nachgewiesene mittels Antennenspulen im Hochfrequenzbereich übertragene Energie und Daten sind relativ störanfällig, da die Informationsübertragung durch andere Sender. Oberwellen usw. gestört werden können. Die gesetzlichen Auflagen in Form von Störpegelvorschriften und Abständen führen weiterhin zu erheblichen Auslegungseinschränkungen.

Da es sich bei den Einrichtungen zur berührungslosen informations- und Energieübertragung in der Regel um ein Transpondersystem handelt, ist der Datenspeicher als ortsveränderliche Einrichtung anzusehen. Dagegen sind die Datenleseeinrichtung und der dazugehörige Schwingkreis für die Energieübertragung als ortsfest anzusehen. Der Datenspeicher wird somit induktiv mit seiner notwendigen Energie versorgt. Die Datenübertragung zum Datenspeicher wird kapazitiv ausgeführt, was durch eine Frequenzmodulation der Energieübertragung geschieht. Gleichzeitig wird ein Taktsignal als synchrones Signal zum Datenlesen verwendet.

Die vorliegende Erfindung definiert ein Vollduplexverfahren in der Form, daß ständig Energie und Daten gleichzeitig gesendet bzw. übertragen werden. Dabei wird die Energie gesendet und auf der anderen Seite gleichgerichtet. Das Senden der Daten wird über eine Frequenzverschiebung realisiert, in dem Augenblick, wo eine Kapazität zugeschaltet wird, wird zwangsläufig die Frequenz langsamer.

Die Erfindung wird anhand eines nachfolgend schematisch dargestellten möglichen Ausführungsbeispieles näher erläutert. Es zeigt:
- Figur 1:: Blockschaltbild eines Datenspeichers mit Datenleseeinrichtung und Energieerzeugung

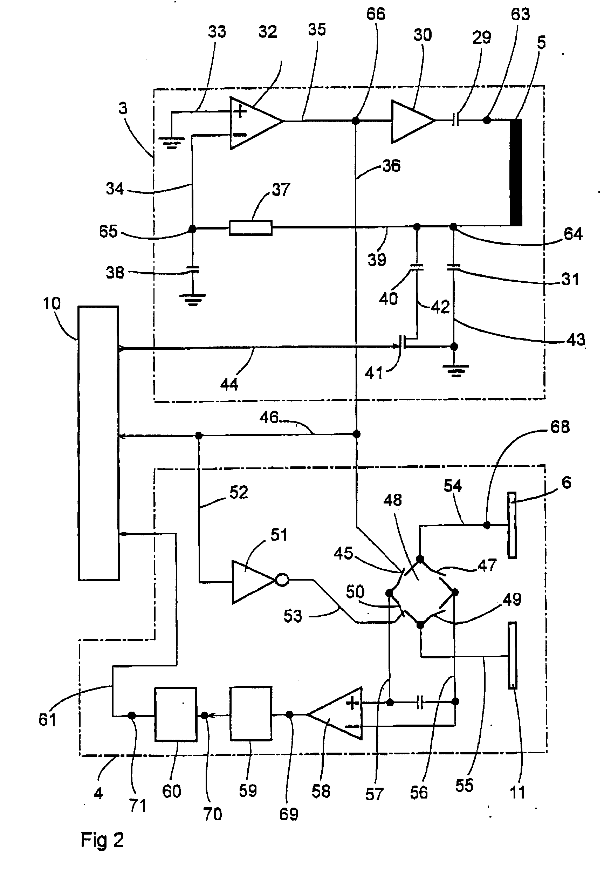

- Figur 2:: Logikeinheit mit Datenleseeinrichtung und Schwingkreis

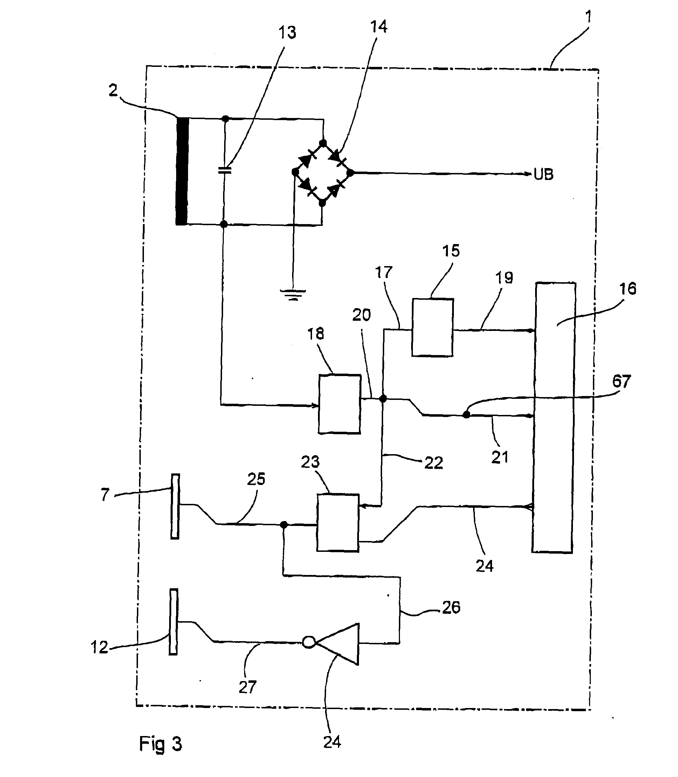

- Figur 3:: Datenspeicher
- Figur 4:: wie Figur 2 mit Phasenschieber
- Figur 5:: Spannungsverlauf innerhalb der Datenleseeinrichtung
- Figur 6:: Spannungsverlauf innerhalb der Datenleseeinrichtung
- Figur 7:: Spannungsverlauf innerhalb der Datenleseeinrichtung
- Figur 8:: Spannungsverlauf am induktiven koppelelement
- Figur 9:: Spannungsverlauf auf der anderen Seite des induktiven Koppelelementes
- Figur 10:: Spannungsverlauf zu Figur 9 jedoch um 90° phasenverschoben
- Figur 11:: Taktfrequenz
- Figur 12:: Taktfrequenz an der Lesestation
- Figur 13:: Datenempfang von dem Datenspeicher in der Datenleseeinrichtung

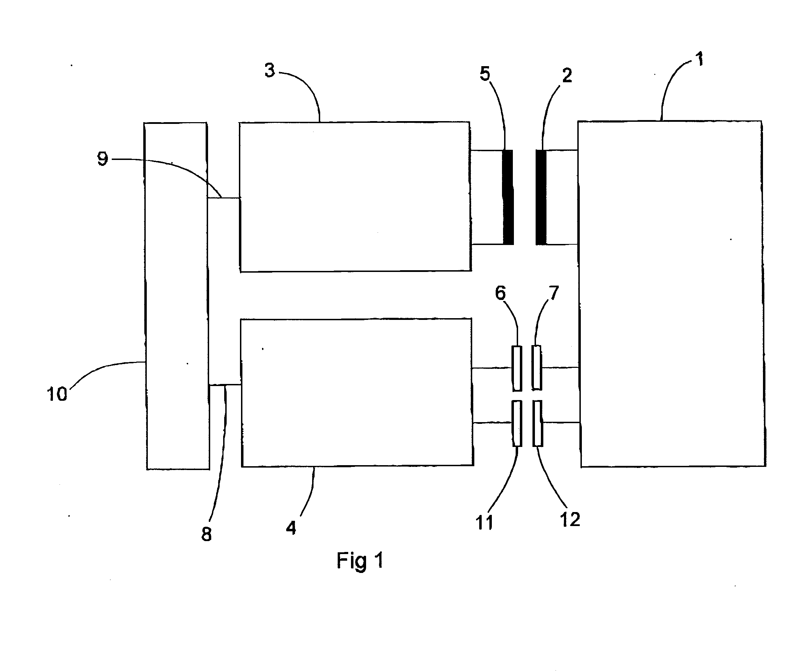

Eine Einrichtung zur berührungslosen lnformations- und Energieübertragung besteht im wesentlichen, wie in dem Blockschaltbild der Figur 1 dargestellt ist, aus einem Datenspeicher 1, einem Schwingkreis 3, einer Datenleseeinrichtung 4 und einer Logikeinheit 10. Die Logikeineit 10 steuert dabei sowohl den Schwingkreis 3, der die Energie für den Datenspeicher 1 erzeugt, und vorzugsweise als selbstgesteuerter Serienschwingkreis ausgebildet ist, um bei einer größtmöglichen Schwingenergie eine optimale Datenübertragung zu gewährleisten, und auch gleichzeitig die Datenleseeinrichtung 4. Dieses geschieht über die Verbindungen 8, 9. Die Energie von dem Schwingkreis 3 wird zum Datenspeicher 1 über induktive Koppel elemente 2. 5 übertragen. Die Datenleseeinrichtung ist dagegen mit entsprechenden Kondensatorplatten 6, 11 ausgestattet, die mit den dazugehörigen Kondensatorplatten 7, 12 des Datenspeiche 1 in der Form korrespondieren, daß sowohl Daten gelesen als auch eingeschrieben werden können. Das Logikteil 10 mit dem Schwingkreis 3 und der Datenleseeinrichtung 4 sowie dem entsprechenden induktiven Koppeleiement 5 und den Kondensatorplatten 6, 11 können insgesamt auch als Sendestation, die ortsfest ist. angesehen werden. Dagegen ist der DatenSpeicher 1 ortsveränderlich und wird aufgrund der konstrukfiv festgelegten Abstände dann mit der Sendestation kommunizieren können,wenn bestimmte Abstände unterschritten werden.

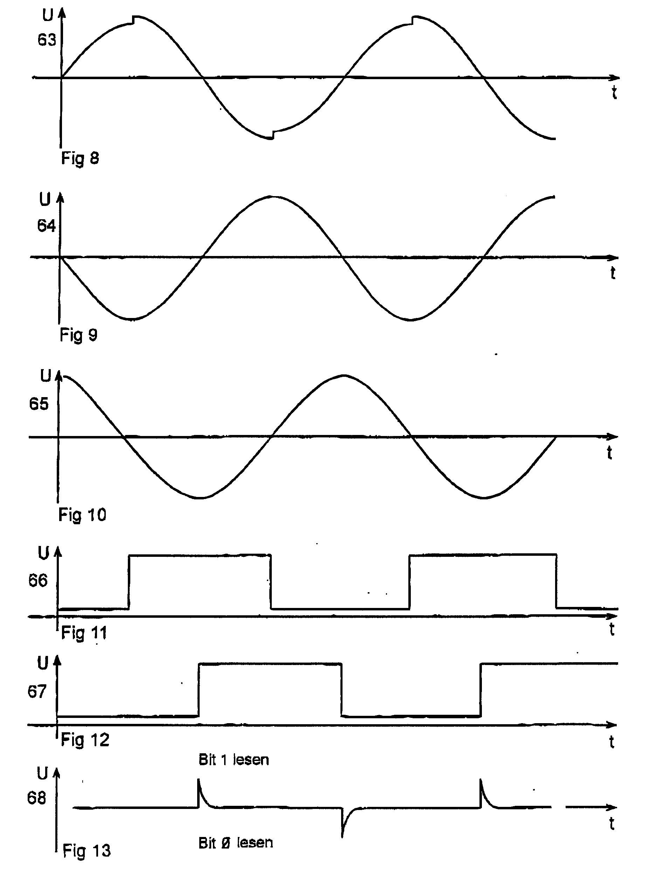

Um Energie übertragen zu können, muß ein Schwingkreis sein, der entsprechend hochohmig eingespeist wird. Die zum Stand der Technik zählenden Parallelschwingkreise arbeiten als Sperrkreise, weiche den Nachteil haben, daß nicht genügend Energie übertragen wird, deshalb wird ein Serienschwingkreis 3 verwendet, der in der Form arbeitet, daß auf der gegenüberliegenden Seite. d.h. auf der Seite des Datenspeichers 1 ebenfalls ein Schwingkreis vorhanden ist, der auf der gleichen Resonanzfrequenz schwingt. in diesem Falle wird ein entsprechender Strom induziert, der sich solange aufschaukelt, bis die Verluste so groß sind daß er im Betrag nicht mehr steigen kann. Sind die Energiebilanzen ausgeglichen, d.h. die zugeführte Energie und die Verluste sind konstant, dann wird auf der Seite der Sendestation die notwendige Energie entzogen. Wenn dieser Schwingkreis verstimmt wird oder belastet, d.h. mit einer anderen Frequenz, nämlich z.B. durch die Belastung mit einer niedrigeren Frequenz schwingt, gibt es einen gegenteiligen Effekt, die Energieübertragung sinkt zwar, aber setzt nicht aus. Diese zum Stand der Technik zählende vorgehensweise führt dazu, daß bei induktiver Kopplung die entsprechende Kapazität kurzfristig kurzgeschlossen wird und dadurch in diesem Zeitpunkt keine Energie übertragen werden kann. Dieses merzt der erfindungsgemäße Gedanke aus, indem über die Logikeinheit 10 durch die Verbindung 44 ein FET-Transistor 41 angesteuert wird. Dieser schaltet über eine Verbindung 42 eine zusätzliche Kapazität eines Kondensators 40 zu der bereits vorhandenen Kapazität des Schwingkreises. nämlich den Kondensatoren 29, 31 hinzu. Der Schwingkreis wird im wesentlichen durch das induktive Koppelelement 5 und die Kondensatoren 29, 31 gebildet. An dem induktiven Koppelelement 5, an dem auch die Kapazität des Kondensators 31 angeschlossen ist, wird über eine Verbindung 39 eine RC-Kombination eines Widerstandes 37 mit einem Kondensator 38 verbunden. Die RC-Kombination ist andererends durch eine Verbindung 34 mit einem Komparator 32 verbunden. Der andere Eingang des Komparators 32 liegt an Masse 33. Der Ausgang des Komparators wird über eine Verbindung 35 mit einem Treiber 30 und gleichzeitig über eine Verbindung 36 mit einem Analogschalter 48 innerhalb der Datenleseeinrichtung 4 verbunden. Wenn sich nun die Spannung auf einen maximalen Wert hochgeschaukelt hat, dann kommt es über die Phasenverschiebung der RC-Kombination des Widerstandes 37 und des Kondensators 38 zu einem Schaltvorgang des Komparators 32. Der Ausgang des Komparators 32 ändert seinen Zustand, was zur Folge hat, daß sich dieser Spannungssprung über den Treiber 30 auf den Kondensator 29 überträgt. Genau im Scheitel der Kurve wird ein Signal eingespeist. Den Kurvenverlauf in dem Meßpunkt 63 zeigt die Figur 8, wo, wie auch in den nachfolgend beschrieben Kurven, stets die Spannung über die Zeit aufgetragen wird. Der hier gezeigte Kurvenverlauf ist ein Sinus (Flanke), der im Scheitelpunkt einen Sprung aufweist. weicher durch den Schaltvorgang des Logikteiles 10, dessen Verlauf in der Figur 11 dargestellt ist und im Meßpunkt 66 übertragen wirt, erzeugt. Zu der Kurve der Figur 8 verhält sich in der Figur 9 der Meßpunkt 64 spiegelbildlich, wobei in diesem Verlauf nicht die in den Scheitelpunkten aufweisenden Sprünge enthalten sind. Durch die RC-Kombination des Widerständes 37 und der Kapazität 38 wird eine Phasenverschiebung erreicht, die in der Figur 10 wiedergegeben ist. Der Meßpunkt hierfür ist der Punkt 65.

Das Senden der Daten wird über eine Frequenzverschiebung realisiert, d.h. in dem Augenblick, wo der Kondensator 40 über den FET-Transistor 41 zugeschaltet wird, verlangsamt sich die Frequenz des Schwingkreises.

Die von dem induktiven Koppelelement 5 übertragene Energie wird von dem induktiven Koppelelement 2 des Datenspeichers 1 empfangen. Parallel zum induktiven Koppelelement 2 befindet sich ein Kondensator 13. Die empfangene Energie uber das induktive Koppelelement 2 wird in einem Gleichrichter 14 gleichgerichtet und zur Energieversorgung der in dem Datenspeicher 1 vorhandenen Bauteile verwendet. Der Datenspeicher 1 besteht im wesentlichen aus einem Controller 16, dem von einem Frequenzmodulator 15 über eine Verbindung 19 ein bestimmtes Frequenzmuster zugesandt wird. Von dem induktiven Koppelelement 2 wird ein Schmitt-Trigger 18 angesteuert, der über Verbindungen 20, 17, 22 einerseits mit dem Frequenzmodulator 15 und über die Verbinde g 21 auch mit dem Controller16 verbunden ist. Darüber hinaus ist ein Logikbaustein 23 XOR vorhanden. Dieser Baustein 23 wird von dem Controller 16 über die Verbindung 24 gesteuert. Der Ausgang des Logikbausteines XOR 23 ist über eine Verbindung 25 mit einer Kondensatorplatte 7 verbunden. Gleichzeitig wird über eine Verbindung 26 ein Gatter 24 angesteuert. weiches eine Signalumkehrung ausführt. Der Ausgang des Gatters 24 ist über eine Verbindung 27 mit einer Kondensatorplatte 12 verbunden.

Das im Schwingkreis 3 entstandene Signal wird über die verbindung 36 und den Analogschalter 48 mit seinen Kontakten 45, 47, 49 50 so gesteuert. daß über die Verbindungen 54, 55 die Informationen an den Kondensatorplatten 6, 11 anliegen. Diese Informationen werden auf die gegenüberliegenden Kondensatorplatten 7, 12 des Datenspeichers 1 dann übertragen. Wenn sich ein Datenbit ändert. wird über XOR 23 eine Phasenverschiebung um praktisch 180° erreicht. Durch diese Negation des Signales wird das Spannungsfeld zwischen den Kondensatorplatten 6, 7 aufgebaut. Dadurch wird gleichzeitig ein nadelförmiger Impuls übertragen, der in der Figur 13 am Meßpunkt 68 innerhalb der Datenleseeinrichtung 4 gemessen wird. Dieses hat zur Folge, daß der Strom immer an den steilen Flanken getriggert wird, und mit diesem Signal werden gleichzeitig die kontakte 45, 47, 49, 50 des Analogschalters 48 geschaltet. Dieses hat zur Folge, daß bei beispielsweise einer Logik 1 über die Verbindung 57 die Information an einen Komparator 58 weitergeleitet wird. Über eine Verbindung 56 wird der zweite Eingang des Komparators 58 von dem Analogschalter 48 ebenfalls angesteuert. Der Ausgang des Komparators 58 geht auf einen Eingang eines Bandpaßfilters 59, um das mit den Informationen (Daten übertragene Rauschen zu unterdrücken. Der Ausgang des Bandpaß filters 59 geht auf einem Schmitt-Trigger 60, dessen Ausgang über eine Vert indung 61 mit der Logikeinheit 10 verbunden ist. Die Logikeinheit 10 ist ebenfalls über eine Verbindung 52 und einem zwischen dem Kontakt 50 des Analogschalters 48 angeordnetem Gatter 51 über die Verbindung 53 verbunden. Durch das Gatter 51 wird das ankommende Signal der Verbindung 36über die Verbindung 46 von dem Schwingkreis 3 negiert.

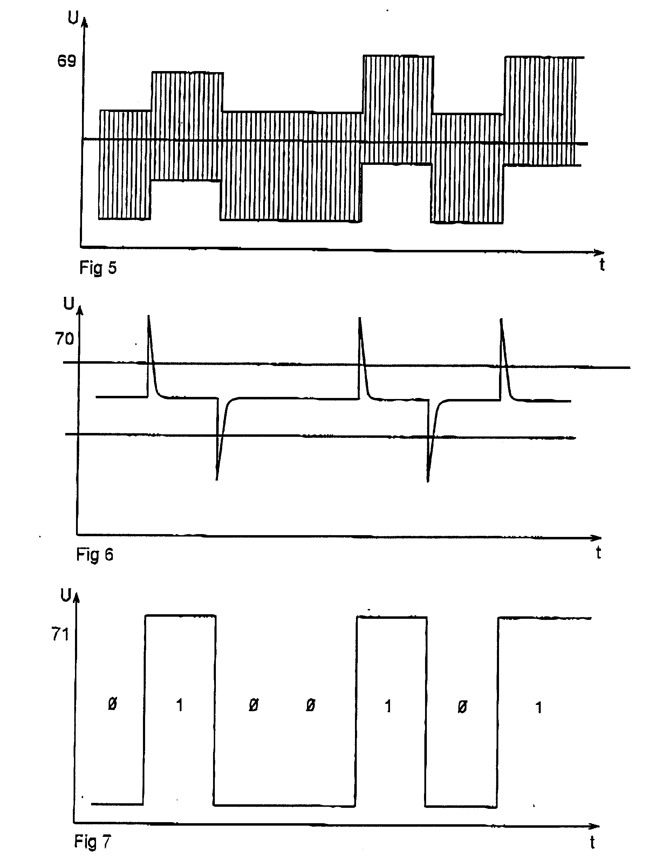

Das aus dem Komparator 58 herauskommende Signal ist in der Figur 5 wiedergegeben. Der Meßpunkt ist hierfür 69. lm Ausgang des Bandpaßfilters 59 wird ein Signal im Meßpunkt 70 gemessen, das in der Figur 6 wiedergegeben ist. Hier sieht man ganz deutlich im Gegensatz zu der Figur 5, daß sämtliches Rauschen aus der Information herausgefiltert worden ist und an den Flanken, d.h. bei einer Informationsänderung Nadeln am Ausgang 70 des Bandpaßfilters 59 entstehen. Diese Nadeln werden in dem Schmitt-Trigger 60 zu der entsprechenden Information, die in Figur 7 wiedergegeben ist, am Meßpunkt 71 umgesetzt.

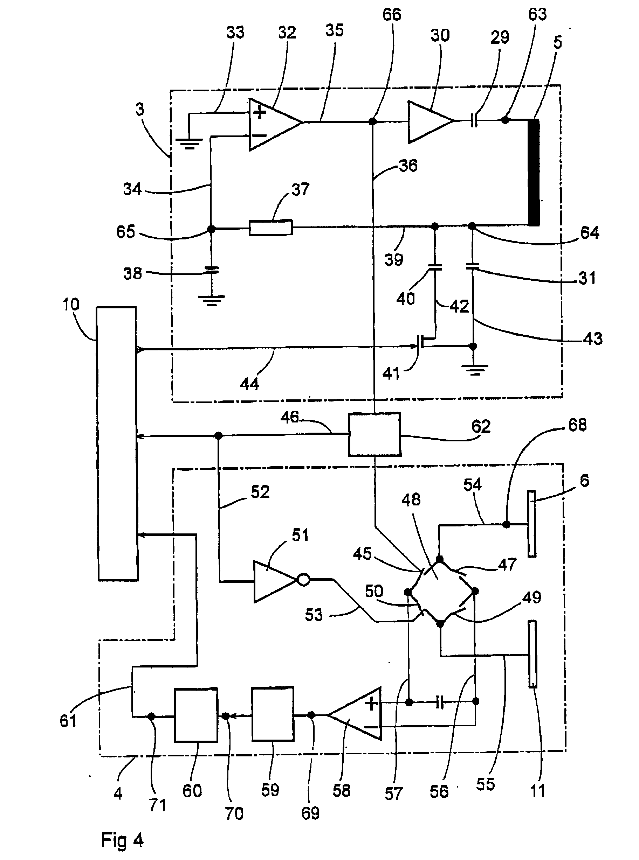

Je nach der Kopplungsintensität verschiebt sich der Grundtak bei derartigen Systemen, so daß es notwendig sein kann, wie in der Figur 4 dargestellt, einen Phasenschieber 62 zwischen dem Schwingkreis 3 und der Datenleseeinrichtung 4 zu schalten. Durch den Phasenschieber 62 wird automatisch von der Logikeinheit 10 auf eine optimale Phasenlage und damit Ansteuerung des Analogschalters 48 geachtet, d.h. wenn die Datenauslesung nicht fehlerfrei ist. so wird automatisch der Phase schieben 62 solange zwischengeschaltet, daß durch eine Phasenverschiebung die Datenübertragung automatisch wieder ausgeglichen wird.

### Bezugszeichen

- 1: Datenspeicher
- 2: induktive Koppelelemente
- 3: Schwingkreis
- 4: Datenleseeinrichtung
- 5: induktive Koppelelemente
- 6: Kondensatorplatte
- 7: Kondensatorplatte
- 8: Verbindung
- 9: Verbindung
- 10: Logikeinheit
- 11: Kondensatorplatte
- 12: Kondensatorplatte
- 13: Kondensator
- 14: Gleichrichter
- 15: Frequenzmodulator
- 16: Controller
- 17: Verbindung
- 18: Schmitt-Trigger
- 19: Verbindung
- 20: Verbindung
- 21: Verbindung
- 22: Verbindung
- 23: XOR
- 24: Gatter
- 25: Verbindung
- 26: Verbindung
- 27: Verbindung
- 28: Verbindung
- 29: Kondensator
- 30: Treiber
- 31: Kondensator
- 32: Komparator
- 33: Masse
- 34: Verbindung
- 35: Verbindung
- 36: Verbindung
- 37: Widerstand
- 38: Kondensator
- 39: Verbindung
- 40: Kondensator
- 41: FET-Transistor
- 42: Verbindung
- 43: Verbindung
- 44: Verbindung
- 45: Kontakt
- 46: Verbindung
- 47: Kontakt
- 48: Analogschalter
- 49: Kontakt
- 50: Kontakt
- 51: Gatter
- 52: Verbindung
- 53: Verbindung
- 54: Verbindung
- 55: Verbindung
- 56: Verbindung
- 57: Verbindung
- 58: Komparator
- 59: Bandbaßfilter
- 60: Schmitt-Trigger
- 61: Verbindung
- 62: Phasenschieber
- 63: Meßpunkt (Kurvenform)
- 64: Meßpunkt (Kurvenform)
- 65: Meßpunkt (Kurvenform)
- 66: Meßpunkt (Kurvenform)
- 67: Meßpunkt (Kurvenform)
- 68: Meßpunkt (Kurvenform)
- 69: Meßpunkt (Kurvenform)
- 70: Meßpunkt Kurvenform)
- 71: Meßpunkt (Kurvenform)

## Patentansprüche

1. Einrichtung zur berührungslosen Informations- und Energieübertragung mit einem drahtlos arbeitenden Datenspeicher (1 ) ohne eigene Stromversorgung und mit einer zugehörigen stromversorgten Steuereinheit in Form einer Datenleseeinrichtung (4), wobei der Datenspeicher (1) über induktive Koppelelemente (2, 5) mit der notwendigen Energie versorgt und wobei kapaz itive Koppelelemente (6, 7, 11, 12) vorhanden sind, wobei eine Datenübertragung bei gleichzeitiger nicht unterbrochener Energ ieübertragung ausgeführt wird, **dadurch gekennzeichnet, daß** die Datenübertragung gleichzeitig durch eine Frequenzmodulation eines von einem Generator erzeugten Wechselspannungssignales über die induktiven Koppelelemente (2, 5) zum Datenspeicher (1) erfolgt und gleichzeitig aus dem übertragenen Wechselspannungssignal ein Taktsignal zur Datenübertragung über die kapazitiven Koppelelemente (6, 7, 11, 12) in die Datenleseeinrichtung (4) gebildet wird.

2. Einrichtung nach Anspruch 1, **dadurch gekennzeichnet, daß** die Datenübertragung eine Vollduplexdatenübertragun umfaßt.

3. Einrichtung nach Anspruch 1 oder 2, **gekennzeichnet durch** einen selbstgeführten Serienschwingkreis (3) zur Energieübertragung.

4. Einrichtung nach den Ansprüchen 1 und 2, **dadurch gekennzeichnet, daß** die Datenübertragung über je zur Datenleseeinrichtung (4) und zu dem Datenspeicher (1) gehörende Plattenpaare (6, 7, 11, 12) zweier Kondensatoren ausgeführt wird.

5. Einrichtung nach Anspruch 1, **dadurch gekennzeichnet, daß** aus dem Taktsignal durch Frequenzmodulation das zum Datenspeicher (1) übertragende Bitmuster gewonnen wird und gleichzeitig die Abgabe des von einer Speichereinheit zu liefemde Datenbitmuster steuert und zur Bildung eines Datenübert agungssignales verwendet wird.

6. Einrichtung nach einem oder mehreren der vorhergehenden Ansprüche, **dadurch gekennzeichnet, daß** die Date Leseeinrichtung (4) aus Logikbausteinen in Verbindung mit einem E²-Prom aufgebaut ist.

7. Einrichtung nach einem oder mehreren der vorhergehenden Ansprüche,**dadurch gekennzeichnet,daß** Zwischen dem Serienschwingkreis (3) und der Datenleseeinrichtung (4) ein Phasenschieber (62) geschaltet ist

8. Einrichtung nach Anspruch 7, **dadurch gekennzeichnet, daß** der Phasenschieber (62) durch eine Logikeinheit (10) gesteuert wird.

## Claims

1. A device for contactless information and energy transmission includes a wireless operating data storage (1) without individual power supply and includes an assigned power supplied control unit in form of a data reader (4), the data storage (1) being supplied with necessary energy via inductive coupling elements (2, 5) and capacitive coupling elements (6, 7, 11, 12) being present, and data transmission being executed simultaneously with non-interrupted energy transmission, **characterised in that** data are transmitted via the inductive coupling elements (2, 5) to the data storage (1), simultaneously, through frequency modulation of an alternating voltage signal produced by a generator, and at the same time a timing signal, for data transmission via the capacitive coupling elements (6, 7, 11, 12) into the data reader (4), is generated from the transmitted alternating voltage signal.

2. A device according to claim 1, **characterised in that** the data transmission comprises a full-duplex data transmission.

3. A device according to the claim 1 or 2, **characterised** through a self-controlled series resonant circuit (3) for the energy transmission.

4. A device according to the claims 1 and 2, **characterised in that** the data transmission is executed via two capacitors' plate couples (6, 7, 11, 12) assigned respectively to the data reader (4) and to the data storage (1).

5. A device according to claim 1, **characterised in that** through frequency modulation the timing signal generates the bit combination transmitted to the data storage (1) and simultaneously controls the release of the data bit combination to be delivered by means of a storage unit and serves to generate a data transmission signal.

6. A device according to one or several of the preceding claims, **characterised in that** the data reader (4) is made from logic units in connection with an E²PROM.

7. A device according to one or several of the preceding claims, **characterised in that** a phase shifter (62) is interposed between the series resonant circuit (3) and the data reader (4).

8. A device according to claim 7, **characterised in that** the phase shifter (62) is controlled by means of a logic unit (10).

## Revendications

1. Dispositif pour la transmission d'information et d'énergie sans contact comprenant une mémoire d'informations (1) travaillant sans-fil et sans propre alimentation en courant électrique, et comprenant une unité de contrôle associée et alimentée en courant électrique sous forme d'une lectrice de données (4), la mémoire d'informations (1) étant alimentée en énergie nécessaire par l'intermédiaire d'éléments de couplage inductifs (2, 5), et comprenant des éléments de couplage capacitifs (6, 7, 11, 12), une transmission de données étant réalisée en même temps qu'une transmission d'énergie ininterrompue, **caractérisé en ce que** la transmission de données via les éléments de couplage inductifs (2, 5) vers la mémoire d'informations (1) est achevée simultanément par une modulation de fréquence d'un signal de tension alternative généré par un générateur et un signal de synchronisation pour la transmission de données via les éléments de couplage capacitifs (6, 7, 11, 12) vers la lectrice de données (4) est formé simultanément à partir du signal de tension alternative transmis.

2. Dispositif selon la revendication 1, **caractérisé en ce que** la transmission de données comprend une transmission de données duplex intégral.

3. Dispositif selon la revendication 1 ou 2, **caractérisé par** un circuit résonnant en série (3) autocommutant.

4. Dispositif selon les revendications 1 et 2, **caractérisé en ce que** la transmission de données est exécutée par des paires de plaques (6, 7, 11, 12) de deux condensateurs associées respectivement à l'unité lectrice de données (4) et à la mémoire d'informations (1).

5. Dispositif selon la revendication 1, **caractérisé en ce que** par l'intermédiaire de modulation de fréquence le signal de synchronisation génère la configuration binaire transmise à la mémoire d'informations (1) et contrôle simultanément l'émission de la configuration binaire des données à fournir par une unité à mémoire et sert à la formation d'un signal de transmission de données.

6. Dispositif selon l'une ou plusieurs des revendications précédentes, **caractérisé en ce que** l'unité lectrice de données (4) est conçue à partir d'éléments logiques en connection avec un E²PROM.

7. Dispositif selon l'une ou plusieurs des revendications précédentes, **caractérisé en ce qu'**un décaleur de phase (62) est incorporé entre le circuit résonnant en série (3) et l'unité lectrice de données (4).

8. Dispositif selon la revendication 7, **caractérisé en ce que** le décaleur de phase (62) est commandé par une unité logique (10).
